# EUROPEAN PATENT APPLICATION

(11) **EP 1 707 446 A2**
(43) Date of publication of application: **04.10.2006**
(21) Application number: 06251852.7
(22) Date of filing: 31.03.2006
(51) Int. Cl.: B60R 21/00

(54) **Communication control apparatus and communication control method**

(30) Priority: 01.04.2005 JP 2005106396
(71) Applicant: Keihin Corporation, Shinjuku-ku, Tokyo (JP); HONDA MOTOR CO., Ltd., Tokyo 107-8556 (JP)
(72) Inventor: Takahashi, Masaaki, c/o Keihin Corporation, Shioya-gun, Tochigi (JP); Nishimura, Junichi, c/o Honda R&D Co. Ltd., Wako-shi, Saitama, 351-0193 (JP); Matsuda, Kazuoi, c/o Honda R&D Co. Ltd., Wako-shi, Saitama, 351-0193 (JP); Ishizaki, Tatsuya, c/o Honda R&D Co. Ltd., Wako-shi, Saitama, 351-0193 (JP)
(74) Representative: Piésold, Alexander James

(57) **Abstract**

A communication control apparatus (1) includes a satellite sensor (20) and ECU (30) for processing detection data detected by the satellite sensor (20). The satellite sensor (20) includes a collision detection sensor (21) and an attachment angle sensor (22) each for detecting a predetermined detection data, an interface (23) for transmitting the detection data detected by these sensors (21, 22) to the ECU (30) through a common signal line (10), and CPU (25) for switching the transmission cycle of the detection data to be transmitted in accordance with types of the sensors. ECU (30) includes a data discrimination unit (37) which discriminates by which sensor the received data has been detected as the detection data.

## Description

The present invention relates to a communication control apparatus, and more particularly to a communication control apparatus and a communication control method for a vehicular hood control apparatus.

Conventionally, vehicular hood control apparatus has been known, which controls a vehicular hood of a vehicle in order to protect a pedestrian when the vehicle collides with the pedestrian. For example, a vehicular hood control apparatus disclosed in Japanese Laid-open Patent Application No. H09-315266 (see paragraphs [0012] to [0018] and FIG. 1) includes a communication control apparatus, which consists of a collision detection sensor attached to the front bumper of a vehicle, and a controller (information processing unit such as ECU) connected to the collision detection sensor through a single signal line. This communication control apparatus operates, when the controller determines that the vehicle collides with a pedestrian, to uplift the vehicular hood for a certain amount and to keep the hood at the uplifted position. Uplifting the hood allows to increase the amount of deformation of the hood toward the downward direction, and hence a collision energy can be absorbed by a deformation of the hood when the pedestrian collides with the hood.

Japanese Laid-open Patent Application No. H08-216826 (see paragraphs [0010] to [0022] and FIG. 1) also discloses a vehicular hood control apparatus. This vehicular hood control apparatus includes a communication control apparatus, which consists of a bumper sensor for detecting an impact from the front side of the vehicle, a hood sensor for detecting an impact from the upper side of the hood, and a controller connected to these sensors through two signal lines for transmitting the output signal of each sensor. This vehicular hood control apparatus inflates an airbag on the hood when impacts from front and upper sides are detected, however, it does not inflate the airbag when an impact is detected from the front side only. This is because when a pedestrian collides with a vehicle, a double collision occurs with the pedestrian being hit twice by the front side of the vehicle and the upper side of the hood. According to this vehicular hood control apparatus, it is possible to prevent an unnecessary expansion of the airbag by means of detecting whether or not the vehicle collides with a pedestrian.

Bumpers and other vehicular parts around the bumper are made of relatively soft materials. Therefore, if a bumper of the vehicle is deformed because of a light collision at a parking lot and the like, an attachment plate for the collision detection sensor attached to the bumper may be deformed or changed in shape. Under such circumstance, in the vehicular hood control apparatuses disclosed in Japanese Laid-open Patent Application Nos.H09-315266 and 08-216826, the collision detection sensor may not detect a collision in an accurate and reliable manner.

In order to overcome the above disadvantage, it is considered to provide an attachment angle sensor separately for detecting the attachment angle of the collision detection sensor so that if the attachment angle is changed to an extent that would affect the accuracy of the collision detection sensor, the change of the attachment angle can be informed to the passengers. In this instance, two sensors such as the collision detection sensor and the attachment angle sensor are employed, which requires two signal lines between the collision detection sensor and the controller as with the communication control apparatus disclosed in Japanese Laid-open Patent Application No. H08-216826. Using two signal lines requires a large installation space in the vicinity of the hood, and further causes the following disadvantages.
(1) Because collision detection information is always transmitted from the collision detection sensor to the controller, communication load to the controller becomes increased. Further, it is necessary to transmit a large amount of data as the collision detection information at an early timing of the collision.
(2) It is necessary to provide a communication interface and a signal line for the attachment angle sensor, separately from a communication interface and a signal line for the collision detection sensor.
(3) Controller requires a costly CPU with high-performance throughput capacity and the like because the software for executing a data reception process for the data detected by the sensors is subject to a large load.
(4) The collision detection sensor is readily subject to an influence from the outside when compared with the case where only one signal line is employed, and therefore, the number of operations for fault diagnosis for the collision detection sensor inevitably increases.

In view of the above, the present invention seeks to provide a communication control apparatus and a communication control method which can establish in a simple configuration and a cheap manner a communication between a plurality of sensors and an information processing unit for processing data detected by each sensor.

It is a first aspect of the present invention to provide a communication control apparatus comprising a sensing device and an information processing device connected to the sensing device through a signal line and processing detection data detected by the sensing device, wherein the sensing device includes: a plurality of sensors each for detecting predetermined detection data; a transmitter for transmitting the detection data detected by the sensors to the information processing device through a common signal line; and a switching device for switching a transmission cycle of the detection data transmitted by the transmitter in accordance with types of the sensors, and wherein the information processing device includes data discrimination means which discriminates received data from the sensing device based on a reception cycle of the received data, the data discrimination means discriminating by which sensor the received data has been detected as the detection data.

According to the above communication control apparatus, the switching device of the sensing device switches and selects the detection data detected by the sensors, determines whether a predetermined transmission timing has been reached, and then transmits , in accordance with the type of the sensor whose detection data is on the transmission timing, the selected detection data to the information processing device by using a plurality of transmission modes having different transmission cycle. The criterion for determining the predetermined transmission timing may be a comparison result, for example, between the value of the detection data to be transmitted by the most frequent timing, that is the detection data to be transmitted by the shortest cycle, and at least one threshold value.

In the aforementioned communication control apparatus, the data discrimination means of the information processing device may read out the received data at a predetermined time interval from received data storage means which temporarily stores data received from the sensing device, add a predetermined value if no received data is stored in the received data storage means, and discriminate by which sensor the received data has been detected as the detection data based on an accumulated value.

According to this communication control apparatus, because the data discrimination means of the information processing device accumulates the predetermined value, it is possible to recognize the reception cycle of the received data. Therefore, if a threshold value is previously provided based on the transmission cycles in accordance with types of the sensors of the sensing device, it is possible to discriminate by which sensor the received data has been detected as the detection data based on the reception cycle of the received data. Timing at which the data discrimination means reads out the received data from the received data storage means, that is the predetermined time interval, is substantially same as the transmission cycle of the detection data to be transmitted by the most frequent timing, that is the transmission cycle of the detection data to be transmitted at the shortest cycle, and is preferably longer to a slight extent in the range from 1 to 10%. This can decrease invitation of errors upon receipt of the detection data to be transmitted at the shortest cycle.

In the aforementioned communication control apparatus, the data discrimination means of the information processing device may abandon the received data that has been temporarily stored in the received data storage means if the accumulated value is not in a predetermined range.

According to this communication control apparatus, if the predetermined range for the accumulated value is determined in advance so as to be adapted to the reception cycle of the detection data, the data discrimination means of the information processing device can discriminate the detection data without error. Meanwhile, if the information processing device receives the detection data, which is to be received at the short cycle, subsequently to the detection data to be received at the long cycle, the accumulated value deviates from the predetermined range at a boundary of these two different detection data. In this instance, this received data cannot be determined if it is received at the short cycle or at the long cycle. For this reason, only this received data is abandoned, thereby allowing an accurate data discrimination by the data discrimination means.

In the aforementioned communication control apparatus, the plurality of sensors of the sensing device may include: a collision detection sensor for detecting collision detection information as the detection data at a time when a vehicle on which is mounted the communication control apparatus collides with a pedestrian; and an attachment angle sensor for detecting attachment angle information as the detection data at a time when an attachment angle of the collision detection sensor is changed, wherein the transmission cycle of the detection data from the collision detection sensor may be shorter than the transmission cycle of the detection data from the attachment angle sensor.

According to this communication control apparatus, the sensing device uses a relatively long transmission cycle for the attachment angle information and a relatively short transmission cycle for the collision detection information. Therefore, the collision detection information can be transmitted to the information processing device in a relatively short period of time. As a result, because of the information processing device, the communication control apparatus enables to swiftly utilize the received collision detection information for the purpose of collision detection of the vehicle.

It is another aspect of the present invention to provide a communication control method for a communication control apparatus, which comprises a sensing device and an information processing device connected to the sensing device through a signal line and processing detection data detected by the sensing device, the method including:
the steps executed by the sensing device comprising:
   a transmitting step for transmitting detection data that is detected by a plurality of sensors each for detecting predetermined detection data to the information processing device through a common signal line, and
   a switching step for switching a transmission cycle of the detection data transmitted in the transmitting step in accordance with types of the sensors, and
   the steps executed by the information processing device comprising:
      a receiving step for receiving detection data from the sensing device; and
      a data discriminating step for discriminating by which sensor the received data has been detected as the detection data based on a reception cycle of the received data.

According to this communication control method, in the switching step at the sensing device, the detection data detected by the sensors can be switched and selected, and if a predetermined transmission timing has been reached, the selected detection data is transmitted to the information processing device, in the transmitting step at the sensing device, with a plurality of different transmission modes having different transmission cycles in accordance with types of the sensors which detects the detection data. Further, based on the reception cycle of the received data to be received in the receiving step at the information processing device, the communication control apparatus discriminates by which sensor the received data has been detected as the detection data in the data discriminating step at the information processing device.

According to the present invention, because plural kinds of detection data detected by the sensing device can be transmitted to the information processing device through a single signal line, it is not necessary to provide dedicated IC and harness for communication. This can contribute to efficient reduction of the installation space, and saving of the manufacturing cost, and further to noise reduction from the outside.

Other features and advantages of the present invention will be apparent from the following description.

A preferred embodiment of the present invention will now be described by way of example only with reference to the accompany drawings, in which:
FIG. 1 is a block diagram illustrating the configuration of a communication control apparatus according to one embodiment of the present invention;
FIG. 2 is a flow chart explaining operations of CPU of the satellite sensor shown in FIG. 1;
FIG. 3 is a diagram explaining operations of CPU as shown in FIG. 2;
FIG. 4 is a diagram explaining the operation for completing a continuous transmission mode at CPU of the satellite sensor shown in FIG. 1, in which (a) indicates acceleration detected by the collision detection sensor, and (b) indicates count of a collision detection timer;
FIG. 5 is a flow chart explaining operations of the data discrimination unit of ECU shown in FIG. 1; and
FIG. 6 is a diagram explaining operations of the data discrimination unit of ECU shown in FIG. 1, in which (a) indicates transmission data of the satellite sensor, (b) indicates received data of ECU, and (c) indicates count of an empty timer measured by the data discrimination unit of ECU.

### CONFIGURATION OF COMMUNICATION CONTROL APPARATUS

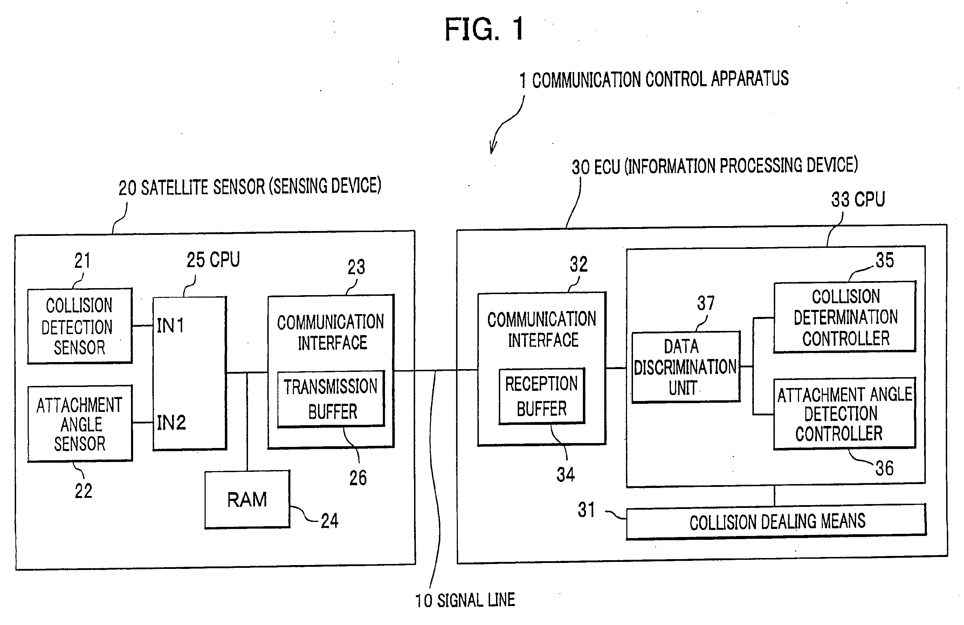

With reference to FIG. 1, a communication control apparatus according to one embodiment of the present invention will be described below.

A communication control apparatus 1 is provided in a vehicle such as automobile. As best seen in FIG. 1, the communication control apparatus 1 includes a satellite sensor 20 and ECU 30, which are connected to each other through a single signal line 10.

The satellite sensor (sensing device) 20 is arranged at a predetermined position of a front part of the vehicle. The satellite sensor 20 transmits an impact received by the vehicle to ECU 30. As shown in FIG. 1, the satellite sensor 20 mainly consists of a collision detection sensor 21, an attachment angle sensor 22, a communication interface 23, a RAM 24, and a CPU 25.

The collision detection sensor 21 is an acceleration sensor for detecting an impact, etc. The detection range of the collision detection sensor 21 is, for example, in the range of ±50-100 G. Analog signal outputted from this sensor is inputted to IN1 of the CPU 25.

The attachment angle sensor 22 is an acceleration sensor for detecting gravity. The detection range of the attachment angle sensor 22 is sufficiently smaller than that of the collision detection sensor 21, and is, for example, in the range of ±1 G. Analog signal outputted from this sensor is inputted to IN2 of the CPU 25. To be described later on, gravity detected by the attachment angle sensor 22 is utilized to determine at the ECU 30 whether or not a change in the attachment angle (change in the sensor attachment angle) of the collision detection sensor 21 occurs.

The communication interface 23 transmits data stored in a transmission buffer 26 with a predetermined transmission mode to the ECU 30 through the signal line 10 based on the control of the CPU 25. The transmission mode includes an intermittent transmission mode Ms having a longer cycle T₁ (e.g. 10-100 ms) and a continuous transmission mode Mc having a shorter cycle T₂ (e.g. 0.5-1 ms).

RAM (Random Access Memory) 24 is a rewritable storage means such as a semiconductor memory and a magnetoresistive random access memory, and is used for the calculation process and the like of the CPU 25 to be described later.

CPU (Central Processing Unit) 25 creates transmission data based on an input signal to IN1 or IN2, and switches the transmission mode between the intermittent transmission mode Ms and the continuous transmission mode Mc in response to the kind of the created transmission data. The CPU 25 executes an interrupt handling for switching the input to be read in the CPU 25 between IN1 and IN2 at every predetermined time T₃ (= T₂/2; e.g. 0.25-0.5 ms). In this interrupt handling, the CPU 25 converts (analog-to-digital conversion) an analog signal to be inputted to IN1 to a digital signal (hereinafter referred to as collision data Dc), and transmits this collision data (collision detection information) Dc with the continuous transmission mode Mc. Further, in this interrupt handling, the CPU 25 converts (analog-to-digital conversion) an analog signal to be inputted to IN2 to a digital signal (hereinafter referred to as attachment angle data Ds), and transmits this attachment angle data (attachment angle information) Ds with the intermittent transmission mode Ms.

ECU (Electronic Control Unit: information processing device) 30 determines whether or not a collision of the vehicle occurs or a change in the sensor attachment angle occurs based on an output data from the satellite sensor 20, and executes a predetermined process in accordance with the collision or the change in the sensor attachment angle. As best seen in FIG. 1, the ECU 30 mainly consists of a collision dealing means 31, a communication interface 32, and a CPU 33.

The collision dealing means 31 executes a process in accordance with a collision of the vehicle or a change in the sensor attachment angle based on a signal outputted from the CPU 33. The collision dealing means 31 executes an inflation operation for expanding a passive safety device (not shown) such as an air bag, based on the collision detection signal to be outputted from a collision determination controller 35. The collision dealing means 31 also informs passengers of the state where the collision detection sensor 21 is unable to perform a normal detection operation, by means of a warning display unit (not shown) or voice guidance, based on an attachment angle abnormal signal to be outputted from an attachment angle detection controller 36.

The communication interface 32 stores the received data in a reception buffer 34 based on the control of the CPU 33.

CPU 33 mainly consists of the collision determination controller 35, the attachment angle detection controller 36, and a data discrimination unit (data discrimination means) 37.

The collision determination controller 35 detects whether or not a collision of the vehicle occurs on the basis of the collision data Dc. If a collision is detected, the collision determination controller 35 outputs a collision detection signal indicating the collision to the collision dealing means 31.

The attachment angle detection controller 36 detects whether or not the attachment angle of the collision detection sensor 21 changes on the basis of the attachment angle data Ds. If a change in the attachment angle of the collision detection sensor 21 is detected, the attachment angle detection controller 36 outputs an attachment angle abnormal signal indicating the change of the attachment angle to the collision dealing means 31.

The data discrimination unit 37 discriminates that the data (received data) received by the communication interface 32 is the collision data Dc or the attachment angle data Ds, and outputs the received data to the collision determination controller 35 or the attachment angle detection controller 36 in accordance with the kind of the data. The data discrimination unit 37 executes an interrupt handling for determining whether or not received data is in the reception buffer 34 at every predetermined time T₄ which is slightly longer than T₂ (e.g. 0.5-1 ms). In this interrupt handling, the data discrimination unit 37 accumulates a value T_{N} of a timer (empty timer) if no received data is in the reception buffer 34. If there is received data in the reception buffer 34, the data discrimination unit 37 discriminates which one of the collision data Dc or the attachment angle data Ds is the received data, based on the value T_{N} of the empty timer.

### INTERRUPT HANDLING AT SATELLITE SENSOR

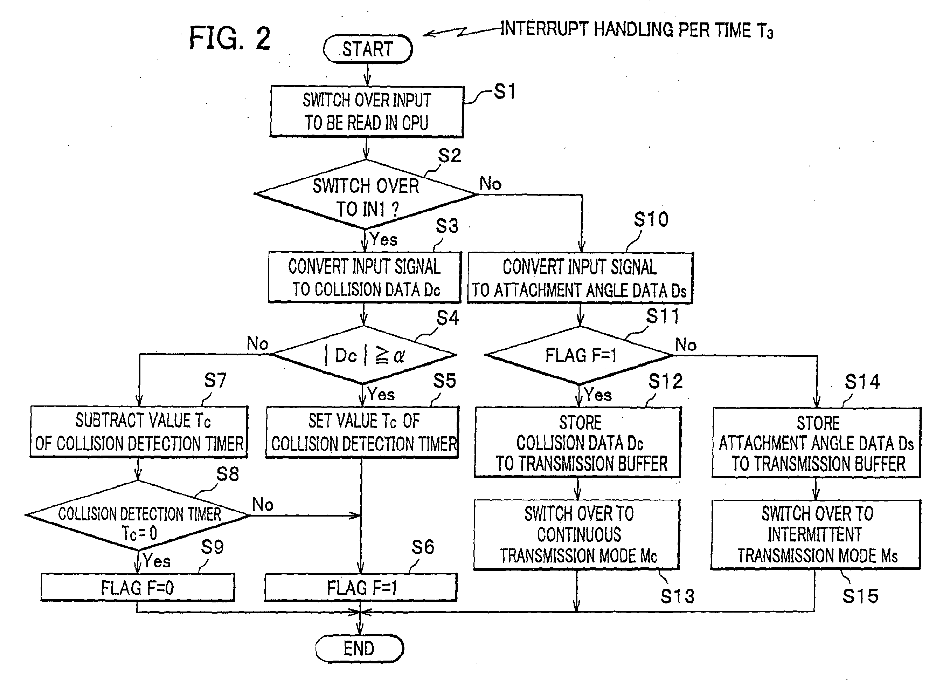

Turning now to FIG. 2 and if necessary to FIG. 1, an interrupt handling which is carried out by CPU 25 of the satellite sensor 20 at every predetermined time T₃ will be described in detail.

At first, CPU 25 switches the input to be read in the CPU 25 between IN1 and IN2 (step S1). To be more specific, if the previous input was for IN2, the CPU 25 switches such that an input for IN1 is read in this time to carry out an alternate switching between IN1 and IN2.

CPU 25 determines whether or not the input has been switched over to IN1 this time (step S2). If the input has been switched to IN1 (step S2 : Yes), the CPU 25 then converts (analog-to-digital conversion) the input analog signal to the collision data Dc (step S3). Subsequently, the CPU 25 determines whether or not the absolute value of the collision data Dc is equal to or greater than a predetermined threshold value α (e.g. 6 G) (step S4). If the absolute value of the collision data Dc is equal to or greater than the threshold value α (step S4: Yes), the CPU 25 sets the value T_{C} of a collision detection timer for a predetermined value X (hereinafter referred to as a timer set value X; e.g. X=100) (step S5), and sets a flag F to "1" (step S6), and then completes the process. Flag "F=1" indicates that a relatively large impact exceeding an allowable range of acceleration (e.g. substantially as large as the gravity; ±G) relative to the vehicle has been detected.

If the absolute value of the collision data Dc is smaller than the threshold value α (step S4: No), the CPU 25 subtracts the value T_{C} of the collision detection timer (step S7), and determines whether the value T_{C} of the collision detection timer is "0" (step S8). If the value T_{C} of the collision detection timer is "0" (step S8: Yes), the CPU 25 sets the flag F to "0" (step S9), and completes the process. Flag "F=0" indicates that an acceleration within the allowable range (e.g. substantially as large as the gravity; ±G) relative to the vehicle has been detected.

On the contrary, if the value T_{C} of the collision detection timer is not "0" (step S8: No), the CPU 25 proceeds to step S6 where the CPU 25 sets the flag F to "1", and then completes the process.

Meanwhile, if the input has been switched for IN2 this time (step S2: No), the CPU 25 converts (analog-to-digital conversion) the input analog signal to the attachment angle data Ds (step S10), and determines whether the flag is "1" (step S11). If the flag is "1" (step S11: Yes), the CPU 25 stores the collision data Dc in the transmission buffer 26 (step S12), and switches the transmission mode to the continuous transmission mode Mc (step S13). This can permit continuous transmission of the collision data Dc (transmitting step). On the contrary, if the flag is "0" (step S11: No), the CPU 25 stores the attachment angle data Ds to the transmission buffer 26 (step S14), and switches the transmission mode to the intermittent transmission mode Ms (step S15). This can permit intermittent transmission of the attachment angle data Ds (transmission step). In this preferred embodiment, the processes performed in the above steps S11 through S15 correspond to the switching step defined in the claims.

### TIME-SERIES OPERATIONS OF SATELLITE SENSOR

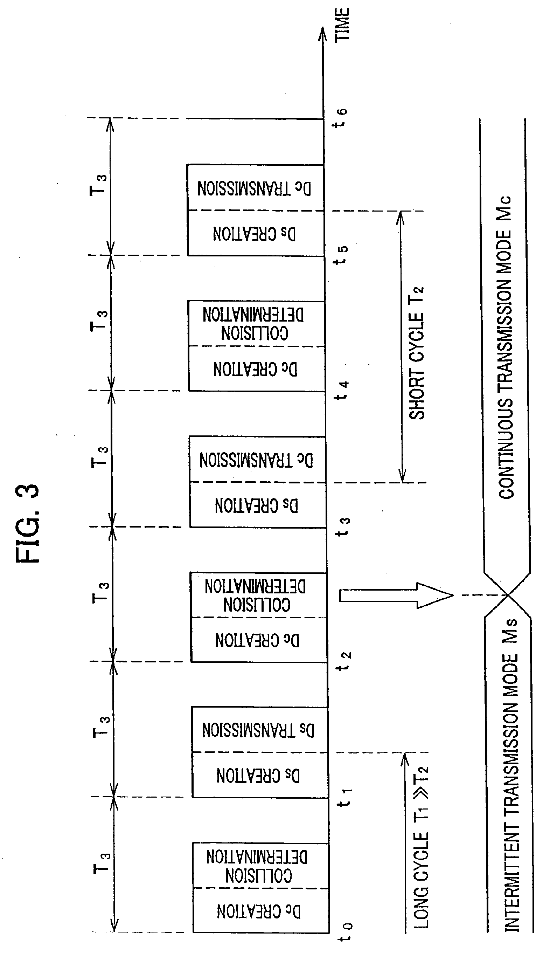

Turning now to FIG. 3 and if necessary to FIG. 2, time-series operations of CPU 25 of the satellite sensor 20 will be described in detail.

In FIG. 3, it is supposed that time points t₀ to t₆ having a predetermined time interval of a predetermined time T₃ elapse, and CPU 25 reads in an input signal for IN1 at the time point to and creates the collision data Dc based on the signal read in the CPU 25 (Dc creation). In this instance, as previously shown in step S4, the CPU 25 compares and determines the magnitude between the collision data Dc and the threshold value α (collision determination). In this point of time, it is supposed that a collision of the vehicle has not occurred yet (flag F=0).

At time point t₁, the CPU 25 reads in an input signal for IN2, and creates the attachment angle data Ds (Ds creation) . In this instance, as previously shown in steps S14 and S15, the CPU 25 transmits the attachment angle data Ds with the intermittent transmission mode Ms (Dstransmission). Namely, the transmission cycle is the long period T₁ which is much longer than the short period T₂.

At time point t₂, the CPU 25 operates in the manner same as in the case of the time point t₀. However, it is supposed that an impact exceeding the allowable range occurs (flag F=1) at this time point.

At time point t₃, the CPU 25 creates the attachment angle data Ds in the same manner as in the case of the time point t₁ (Ds creation), and thereafter transmits the collision data Dc with the continuous transmission mode Mc (Dc transmission) as shown in the previous steps S12 and S13. Next, at time point t₄, the CPU 25 operates in a manner same as in the case of the time point t₀, and at time point t₅, the CPU 25 operates in the same manner as in the case of the time point t₃. Namely, the transmission cycle is the shot period T₂ (=2T₃). After time point t₆, the CPU 25 repeats the same operations until the impact is determined within the allowable range (flag F=0) by the collision determination.

### OPERATIONS AT SATELLITE SENSOR UPON IMPACT CONVERGING

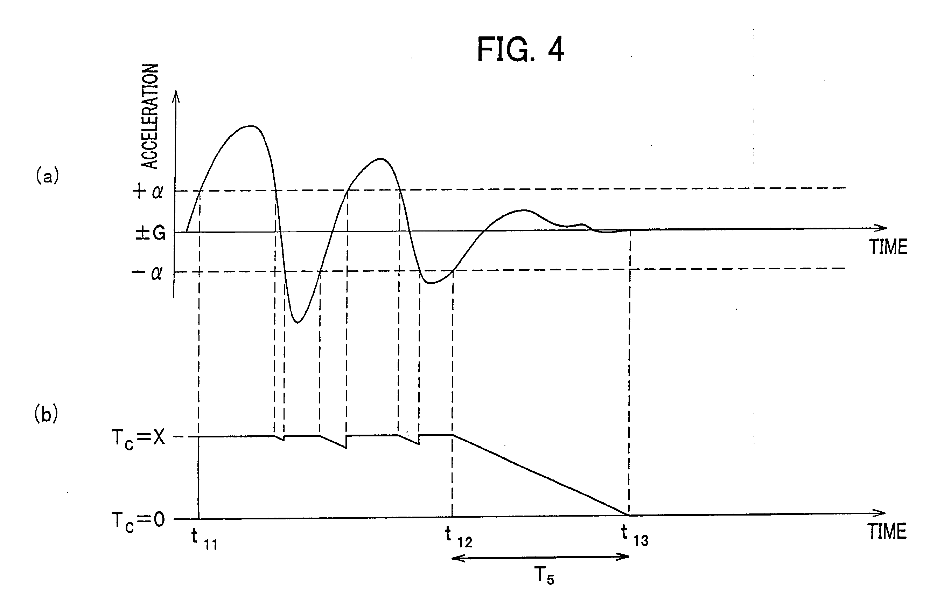

Turning now to FIG. 4 and if necessary to FIGS. 2 and 3, operation of CPU 25 will be described for the case where an impact exceeding the allowable range converges to the allowable range (instance where the continuous transmission mode Mc is completed).

As best seen in FIG. 4(a), acceleration detected by the collision detection sensor 21 firstly exceeds the threshold value α at the time point t₁₁, and further exceeds the absolute value of the threshold value α for several times before the time point t₁₂. After the time point t₁₂, the acceleration gradually reduces the amplitude, and at the time point t₁₃, the acceleration converges to the range of ±G.

As seen in FIG. 4(b), the value T_{C} of the collision detection timer firstly becomes the timer set value X at the time point t₁₁, and keeps the count of the timer set value X in the range where the acceleration detected by the collision detection sensor 21 exceeds the absolute value of the threshold value α. The value T_{C} of the collision detection timer decreases at a constant rate in the range where the acceleration is within the absolute value of the threshold value α. To be more specific, the value T_{C} of the collision detection timer decreases at the constant rate from the time point t₁₂, and becomes "0" at the time point t₁₃. If a time interval from the time point t₁₂ to the time point t₁₃ is T₅, the time interval T₅ (e.g. 50-100 ms) can be given by the product of the short cycle T₂ and the timer set value X.

Previously setting the timer set value X as described above enables CPU 25 to confirm whether the impact has been sufficiently smaller, thereby allowing the switching from the continuous transmission mode Mc to the intermittent transmission mode Ms without error.

### INTERRUPT HANDLING AT ECU

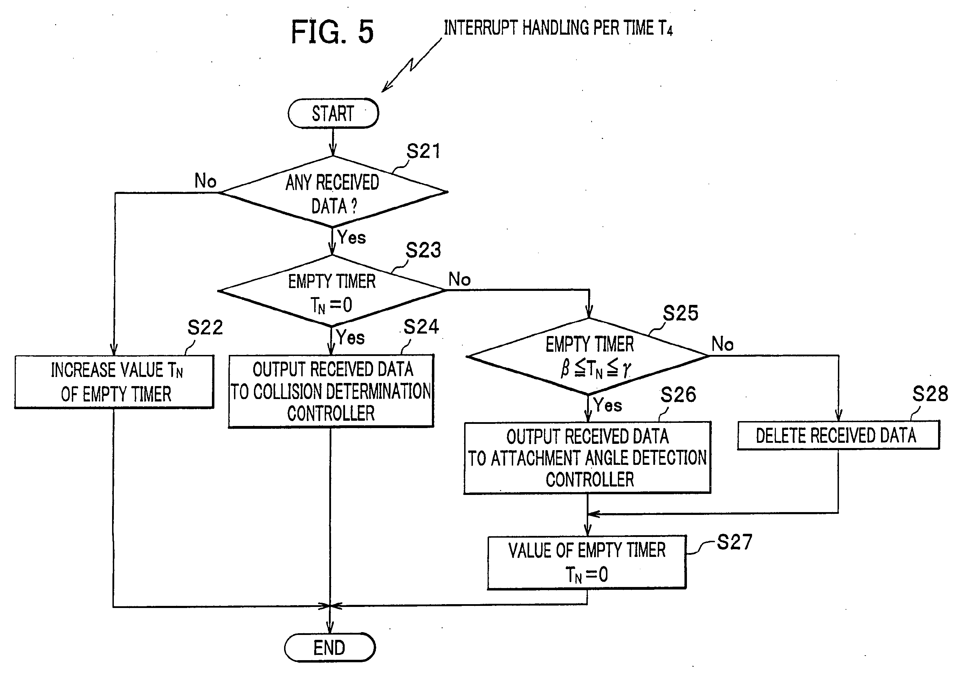

Turning now to FIG. 5 and if necessary to FIG. 1, an interrupt handling which is carried out by the data discrimination unit 37 of ECU 30 at every predetermined time T₄ will be described in detail.

At first, the data discrimination unit 37 determines if there is any received data in the reception buffer 34 (step S21). If there is no received data in the reception buffer 34 (step S21: No), the data discrimination unit 37 increases the value T_{N} (adds a predetermined value to the value T_{N}) of an empty timer (step S22), and completes the process. The empty timer is a timer for measuring the total (accumulated) time period during which no received data is in the reception buffer 34.

If there is received data in the reception buffer 34 (step S21: Yes) (receiving step), the data discrimination unit 37 determines whether or not the value T_{N} of the empty timer is "0".

If the value T_{N} of the empty timer is "0" (step S23: Yes), the data discrimination unit 37 outputs the received data to the collision determination controller 35 (step S24), and completes the process. Meanwhile, if the value T_{N} of the empty timer is not "0" (step S23: No), the data discrimination unit 37 determines whether the value T_{N} is in a predetermined range (β ≤ T_{N} ≤ γ) (step S25). In order to discriminate the long cycle T₁, the predetermined values β, γ are defined in advance to take values, for example, corresponding to 10-100 ms.

If the value T_{N} of the empty timer is in the predetermined range (β ≤ T_{N} ≤ γ) (step S25: Yes), the data discrimination unit 37 outputs the received data to the attachment angle detection controller 36 (step S26), and sets the value T_{N} of the empty timer to "0" (step S27), and then completes the process.

If the value T_{N} of the empty timer is not in the predetermined range (β ≤ T_{N} ≤ γ) (step S25: No), the data discrimination unit 37 deletes the received data from the reception buffer 34 (step S28), and proceeds to step S27. Namely, the data discrimination unit 37 sets the value T_{N} of the empty timer to "0" and completes the process. In this preferred embodiment, the processes performed in the above steps S23 and S25 correspond to the data discriminating step defined in the claims.

### TIME-SERIES OPERATIONS OF DATA DISCRIMINATION UNIT

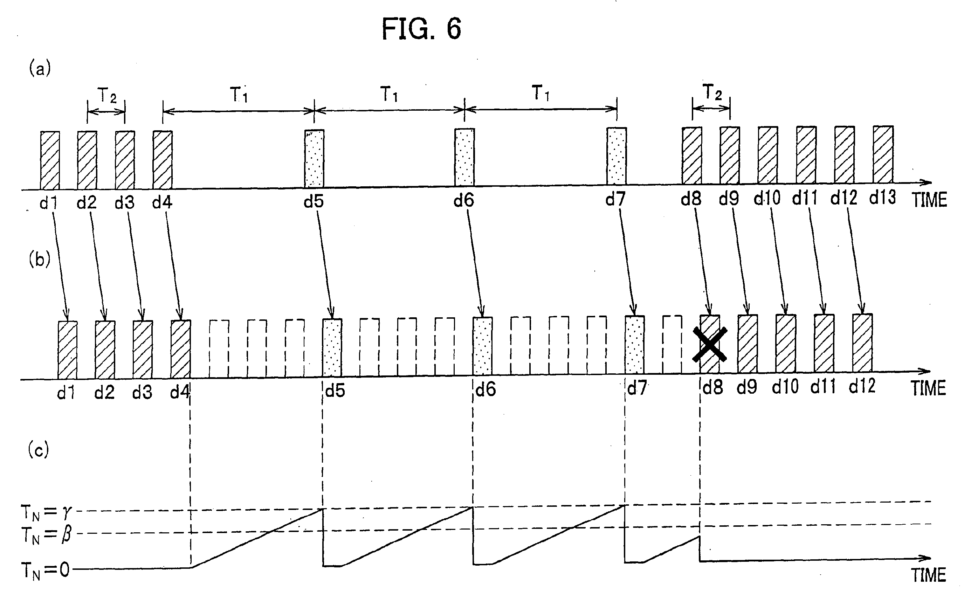

Turning now to FIG. 6 and if necessary to FIG. 5, time-series operations of the data discrimination unit 37 will be described in detail.

As best seen in FIG. 6(a), the satellite sensor 20 transmits data d₁ to data d₁₃ in order with a predetermined cycle. CPU 25 of the satellite sensor 20 transmits data d₁ through data d₄ and data d₈ through data d₁₃ with the continuous transmission mode Mc, and transmits data d₅ through data d₇ with the intermittent transmission mode Ms. In other words, data d₅ through data d₇ is transmitted at every long cycle T₁ following the previously transmitted data. Data d₂ through d₄ and data d₉ through d₁₃ is transmitted at every shot cycle T₂ following the previously transmitted data. Further, data d₈ is transmitted after the transmission of data d₇ with a predetermined time interval.

As best seen in FIG. 6(b), ECU 30 receives the data d₁ through data d₁₃ with a predetermined time difference (data d₁₃ is omitted in this figure). This is because the cycle (T₄; e.g. 0.55 ms) by which the data discrimination unit 37 of the ECU 30 executes the interrupt handling for referring to the reception buffer 34 is slightly longer than the cycle (T₂; e.g. 0.5 ms) by which the CPU 25 of the satellite sensor 20 executes the transmission process in the continuous transmission mode Mc.

Broken lines between the data d₄ and d₅ received indicate that there is no received data in the reception buffer 34. Also, there is no received data between data d₅ and data d₆, between data d₆ and data d₇, and between data d₇ and data d₈. Further, the data discrimination unit 37 abandons or deletes the data d₈ by the following reason.

As best seen in FIG. 6(c), the value T_{N} of the empty timer is "0" until the reception of the data d₄ is completed. This is because while the cycle T₂ for the continuous transmission mode Mc is set, for example, to 0.5 ms as previously described, the cycle T₄ by which the data discrimination unit 37 refers to the reception buffer 34 is set, for example, to 0.55 ms, so that whenever the data discrimination unit 37 refers to the reception buffer 34, received data is in the reception buffer 34. For this reason, the value T_{N} of the empty timer always takes "0", which enables the data discrimination unit 37 to discriminate the data d₁ through data d₄ as data having been transmitted with the continuous transmission mode Mc, that is, the collision data Dc.

The value T_{N} of the empty timer increases at a constant rate from when the reception of the data d₄ is completed to when the reception of the data d₅ is initiated as seen in FIG. 6 (c) . This is because no received data is in the reception buffer 34. In this figure, the value T_{N} of the empty timer takes the predetermined value γ at a time when the reception of the data d₅ is initiated. Therefore, the data discrimination unit 37 discriminates the data d₅ as data having been transmitted with the intermittent transmission mode Ms, that is, the attachment angle data Ds. The value T_{N} of the empty timer takes "0" until the reception of the data d₅ is completed. The reception of the data d₆ and d₇ can be explained as with the case of the data d₅.

Next, the value T_{N} of the empty timer increases at a constant rate until the reception of the data d₈ is initiated. However, in this instance, the value T_{N} takes a value smaller than the predetermined value β at a time when the reception of the data d₈ is initiated. Therefore, the data discrimination unit 37 is unable to discriminate with which transmission mode the data d₈ has been transmitted, that is, what is the data d₈. For this reason, the data discrimination unit 37 abandons the data d₈.

According to the communication control apparatus 1 in this preferred embodiment, the collision data and the attachment angle data can be transmitted from the satellite sensor 20 to ECU 30 through a single signal line 10, and the ECU 30 discriminates the received data to execute a predetermined process in accordance with the received data. As described above, because the satellite sensor 20 and the ECU 30 are connected through a single signal line 10, it is possible to simplify the configuration required for the communication control apparatus 1 and to save the installation space in the vicinity of the vehicular hood comparing with the conventional arrangement in which two signal lines associated with the two sensors 21, 22 are provided. Further, such configuration of the communication control apparatus 1 contributes to decrease in the manufacturing cost as well as noise reduction from the outside.

While the present invention has been described with reference to a preferred embodiment thereof, it is to be understood that various changes and modifications may be made without departing from the scope of the invention. For example, the preferred embodiment has been described for one example of the communication control apparatus 1 including one satellite sensor 20. However, the number of satellite sensors 20 is arbitrary and a plurality of satellite sensors 20 may be employed.

Although the preferred embodiment has been described for the communication control apparatus 1 used in a vehicular hood control apparatus, the present invention may be used for a communication control apparatus for other than the vehicular hood control apparatus.

## Claims

1. A communication control apparatus comprising a sensing device and an information processing device connected to the sensing device through a signal line and processing detection data detected by the sensing device,
wherein the sensing device includes:
a plurality of sensors each for detecting predetermined detection data;
a transmitter for transmitting the detection data detected by the sensors to the information processing device through a common signal line; and
a switching device for switching a transmission cycle of the detection data transmitted by the transmitter in accordance with types of the sensors, and
wherein the information processing device includes data discrimination means which discriminates received data from the sensing device based on a reception cycle of the received data, the data discrimination means discriminating by which sensor the received data has been detected as the detection data.

2. A communication control apparatus according to claim 1, wherein the data discrimination means of the information processing device reads out the received data at a predetermined time interval from received data storage means which temporarily stores data received from the sensing device, adds a predetermined value if no received data is stored in the received data storage means, and discriminates by which sensor the received data has been detected as the detection data based on an accumulated value.

3. A communication control apparatus according to claim 2, wherein the data discrimination means of the information processing device abandons the received data that has been temporarily stored in the received data storage means if the accumulated value is not in a predetermined range.

4. A communication control apparatus according to any one of claims 1 to 3, wherein the plurality of sensors of the sensing device include:
a collision detection sensor for detecting collision detection information as the detection data at a time when a vehicle on which is mounted the communication control apparatus collides with a pedestrian; and
an attachment angle sensor for detecting attachment angle information as the detection data at a time when an attachment angle of the collision detection sensor is changed,
wherein the transmission cycle of the detection data from the collision detection sensor is shorter than the transmission cycle of the detection data from the attachment angle sensor.

5. A communication control method for a communication control apparatus, which comprises a sensing device and an information processing device connected to the sensing device through a signal line and processing detection data detected by the sensing device, the method including:
the steps executed by the sensing device comprising:
a transmitting step for transmitting detection data that is detected by a plurality of sensors each for detecting predetermined detection data to the information processing device through a common signal line, and
a switching step for switching a transmission cycle of the detection data transmitted in the transmitting step in accordance with types of the sensors, and
the steps executed by the information processing device comprising:
a receiving step for receiving detection data from the sensing device; and
a data discriminating step for discriminating by which sensor the received data has been detected as the detection data based on a reception cycle of the received data.
